# EUROPEAN PATENT SPECIFICATION

(11) **EP 3 163 657 B1**
(45) Date of publication and mention of the grant of the patent: **05.08.2020**
(21) Application number: 15811511.3
(22) Date of filing: 25.06.2015
(51) Int. Cl.: H01M 4/525, H01M 4/36, H01M 4/505

(54) **POSITIVE ELECTRODE ACTIVE SUBSTANCE PARTICLE POWDER FOR NON-AQUEOUS ELECTROLYTE SECONDARY BATTERY, PRODUCTION METHOD THEREFOR, AND NON-AQUEOUS ELECTROLYTE SECONDARY BATTERY**
POSITIVES ELEKTRODENAKTIVSUBSTANZPARTIKELPULVER FÜR EINE SEKUNDÄRBATTERIE MIT NICHTWÄSSRIGEM ELEKTROLYT, HERSTELLUNGSVERFAHREN DAFÜR UND SEKUNDÄRBATTERIE MIT NICHTWÄSSRIGEM ELEKTROLYT
POUDRE DE PARTICULES DE SUBSTANCE ACTIVE D'ELECTRODE POSITIVE POUR BATTERIE SECONDAIRE A ELECTROLYTE NON AQUEUX, SON PROCEDE DE PRODUCTION, ET BATTERIE SECONDAIRE A ELECTROLYTE NON AQUEUX

(30) Priority: 26.06.2014 JP 2014131908
(43) Date of publication of application: 03.05.2017
(73) Proprietor: Toda Kogyo Corp., Hiroshima-shi, Hiroshima 732-0828 (JP)
(72) Inventor: YAMAMURA,Takayuki, Onoda-shi Yamaguchi 756-0847 (JP); KASHIMA, Tetsuya, Onoda-shi Yamaguchi 756-0847 (JP); MASAKI, Ryuta, Onoda-shi Yamaguchi 756-0847 (JP); KOGA, Kazumichi, Onoda-shi Yamaguchi 756-0847 (JP)
(74) Representative: J A Kemp LLP
(86) International application number: PCT/JP2015/068298
(87) International publication number: WO 2015/199168

(56) References cited:
- EP-A1- 2 518 804
- WO-A1-2011/162157
- WO-A1-2012/111116
- WO-A1-2013/015069
- WO-A1-2013/015069
- WO-A1-2013/145846
- WO-A1-2014/149020
- JP-A- 2005 320 184
- JP-A- 2013 084 395
- JP-A- 2013 084 395
- JP-A- 2013 143 380
- US-A1- 2014 099 545

## Description

### TECHNICAL FIELD

The present invention provides positive electrode (cathode) active substance particles comprising a lithium composite oxide having a layered rock salt structure which are capable of reducing a D.C. resistance of a battery under low-temperature conditions when used as a positive electrode active substance for non-aqueous electrolyte secondary batteries.

### BACKGROUND ART

With the recent rapid development of portable and cordless electronic devices such as audio-visual (AV) devices and personal computers, there is an increasing demand for secondary batteries having a small size, a light weight and a high energy density as a power source for driving these electronic devices. Under these circumstances, lithium ion secondary batteries having advantages such as a high charge/discharge voltage and a large charge/discharge capacity have been noticed.

At present, in the lithium ion secondary batteries, it has been strongly required to suppress deterioration in charge/discharge capacity due to repeated charge/discharge cycles, and reduce a D.C. resistance, in particular, under low-temperature conditions. To meet the requirements, there have been proposed the method of suitably controlling a particle size and a particle size distribution of the positive electrode active substance particles; the method of obtaining the positive electrode active substance particles having a high crystallinity by controlling a calcination temperature thereof; the method of adding different kinds of elements to the positive electrode active substance particles to strengthen a bonding force of the crystals; the method of subjecting the positive electrode active substance particles to surface treatment; or the like.

Hitherto, there is known the method of mixing particles of a lithium composite oxide with an aqueous solution prepared by dissolving a W compound in water, and calcining the resulting mixture to form fine particles comprising W and Li on a surface of respective primary particles constituting lithium composite oxide particles, for the purpose of reducing a resistance of a positive electrode of a battery produced therefrom and improving output characteristics of the battery (Patent Literature 1). In addition, there is also known the method of mixing a lithium composite oxide as a raw material with compounds of additive elements such as Mo and W, and calcining the resulting mixture to control an atomic ratio of a total amount of the additive elements to a total amount of Li present on a surface portion of respective primary particles of the lithium composite oxide and metal elements other than the additive elements to not less than 5 times the atomic ratio calculated with respect to the whole particles, for the purpose of improving load characteristics such as output characteristics of a battery produced therefrom (Patent Literature 2).

### CITATION LIST

### Patent Literature

Patent literature 1: Japanese Patent Application Laid-Open (KOKAI) No. 2012-079464
Patent literature 2: Japanese Patent Application Laid-Open (KOKAI) No. 2008-305777

### SUMMARY OF INVENTION

### Technical problem

However, the positive electrode active substances described in the above Patent Literatures 1 and 2 comprise a substance obtained by chemically reacting Li, Ni and W with each other on a surface of respective particles thereof, and therefore are unsatisfactory in improving resistance characteristics of a battery under low-temperature conditions and thus still insufficient in practical applications.

In consequence, an object or technical task of the present invention is to provide positive electrode active substance particles for non-aqueous electrolyte secondary batteries which are excellent in D.C. resistance characteristic under low-temperature conditions and a process for producing the positive electrode active substance particles, and a non-aqueous electrolyte secondary batter. In particular, an object or technical task of the present invention is to solve such a problem that a lithium positive electrode material having a layered rock salt structure has a high resistance under low-charged conditions.

### Solution to Problem

The above problem and technical tasks of the present invention can be solved and accomplished by the following aspects of the present invention.

That is, according to the present invention, there are provided positive electrode active substance particles for non-aqueous electrolyte secondary batteries, consisting of lithium composite oxide particles having a layered rock salt structure which are chemically reacted with at least Li and comprise at least one element selected from the group consisting of Ni, Co and Mn, and
tungsten which is present in the form of granular tungsten oxide particles which are present in contact with the surface of the respective lithium composite oxide particles,
in which tungsten oxide particles W is present in an amount of 0.1 to 4.0 mol% based on a total molar amount of Ni, Co and Mn in the lithium composite oxide particles, and the tungsten oxide particles have an average secondary particle diameter of 0.3 to 3.0 µm.

Preferably, the tungsten oxide particles have an average secondary particle diameter of 0.3 to 2.5 µm.

It is more preferred that the lithium composite oxide particles have a composition represented by the formula:

Liₐ(NiₓCO_{y}Mn_{z})O₂

wherein a is not less than 0.9 and not more than 1.2 and a sum of x, y and z is 1.

It is further preferred that the lithium composite oxide comprises all of Ni, Co and Mn.

It is additionally preferred that the average secondary particle diameter of the lithium composite oxide particles is 2.0 to 20 µm.

It is also preferred that the tungsten oxide particles are selected from WO₂ and WO₃.

It is further preferred that the tungsten oxide particles are WO₃.

It is also preferred that the average secondary particle diameter of the tungsten oxide particles is not less than 0.02 and not more than 0.75 times the average secondary particle diameter of the lithium composite oxide particles.

It is additionally preferred that the BET specific surface area of the positive electrode active substance particles is not less than 0.25 and not more than 1.70 m²/g.

In one embodiment, the positive electrode active substance particles for non-aqueous electrolyte secondary batteries of the invention are such that a secondary battery comprising a positive electrode using the positive electrode active substance particles and a counter electrode using metallic lithium has an improvement ratio of a D.C. resistance of not less than 5% as measured by controlling a state of charge (SOC) of the secondary battery to 20% at an ambient temperature of -10°C.

In addition, according to the present invention, there is provided a process for producing positive electrode active substance particles for non-aqueous electrolyte secondary batteries of the invention, comprising the step of mixing lithium composite oxide particles having a layered rock salt structure which are chemically reacted with at least Li and comprise at least one element selected from the group consisting of Ni, Co and Mn, and tungsten oxide particles, in which the tungsten oxide particles have an average secondary particle diameter of 0.3 to 3.0 µm; an average secondary particle diameter of the tungsten oxide particles is not less than 0.02 time and not more than 0.75 time an average secondary particle diameter of the lithium composite oxide particles; and tungsten oxide is added such that W is present in an amount of 0.1 to 4.0 mol% based on a total molar amount of Ni, Co and Mn in the lithium composite oxide particles.

Preferably, the step of mixing the lithium composite oxide particles and tungsten oxide particles involves mixing the particles in a dry manner, mixing and drying the particles in a wet manner or mixing the particles in a spray-dry manner.

Also preferred is a positive electrode comprising the positive electrode active substance particles according to the invention, a conducting agent and a binder.

Further, according to the present invention, there is provided a non-aqueous electrolyte secondary battery using the positive electrode active substance particles for non-aqueous electrolyte secondary batteries of the invention.

Also provided is the use of the positive electrode active substance particles according to the invention in a non-aqueous electrolyte secondary battery.

### Advantageous Effect of Invention

The positive electrode active substance particles for non-aqueous electrolyte secondary batteries according to the present invention are capable of providing a battery that is excellent in D.C. resistance characteristics under low-temperature conditions and exhibits a high output even under low-temperature environmental conditions, and therefore can be suitably used as a positive electrode active substance for non-aqueous electrolyte secondary batteries.

### BRIEF DESCRIPTION OF DRAWINGS

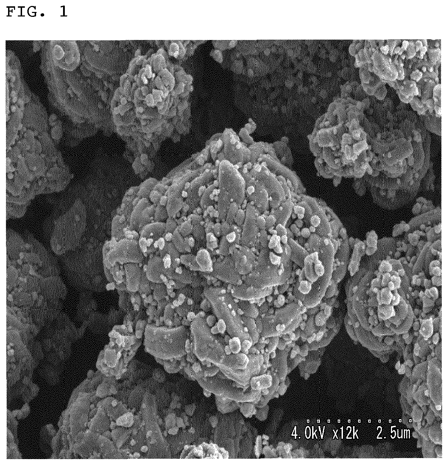

FIG. 1 is an SEM image of positive electrode active substance particles obtained in Example 3.

### DESCRIPTION OF EMBODIMENTS

The construction of the present invention is described in more detail below.

First, the positive electrode active substance particles for non-aqueous electrolyte secondary batteries according to the present invention are described.

The positive electrode active substance particles according to the present invention consist of lithium composite oxide particles having a layered rock salt structure which are chemically reacted with at least Li and comprise at least one element selected from the group consisting of Ni, Co and Mn, and tungsten oxide particles.

The lithium composite oxide particles having a layered rock salt structure (belonging to space group R3-m) which are chemically reacted with at least Li and comprise at least one element selected from the group consisting of Ni, Co and Mn, as used in the present invention, has a composition represented by the formula: Liₐ(NiₓCO_{y}Mn_{z})O₂ wherein a is not less than 0.9 and not more than 1.2 (0.9 • a • 1.2) and a sum of x, y and z is 1 (x + y + z = 1). In particular, the lithium composite oxide preferably comprise all of Ni, Co and Mn. For example, the composition of the lithium composite oxide is represented by Liₐ(Ni_{0.33}CO_{0.33}Mn₀.₃₃)O₂, Liₐ(Ni_{0.5}CO_{0.2}Mn₀.₃)O₂ or the like. Meanwhile, the term "layered" means not a whole shape of the oxide but a layered crystal structure.

The average secondary particle diameter of the lithium composite oxide particles is preferably 2.0 to 20 *µ*m, more preferably 2.5 to 13 *µ*m, and even more preferably 3.0 to 12 *µ*m. When the average secondary particle diameter of the lithium composite oxide particles is more than 20 *µ*m, the resulting battery tends to be deteriorated in D.C. resistance under low-temperature conditions. It is difficult to produce lithium composite oxide particles having an average secondary particle diameter of less than 2.0 *µ*m, and therefore such lithium composite oxide particles tend to be unpractical.

The tungsten oxide used in the present invention may be selected from WO₂ and WO₃. Of these tungsten oxides, preferred is WO₃.

In general, it is known that the tungsten oxide is hard but has a good electrical conductivity. Although detailed mechanism is not clearly determined, it is considered by the present inventors that the tungsten oxide particles are brought into point contact with each other in a gap (interface) between the lithium composite oxide particles to thereby exhibit any effects thereon, so that the resulting battery is improved in conductivity to reduce a D.C. resistance thereof under low-temperature conditions. In particular, it is known that WO₃ is a ferroelectric substance having a semiconductor-like behavior ("Proceedings 1 of 1960 Autumn Subcommittee Meeting of The Physical Society of Japan", The Physical Society of Japan, p. 76). Thus, it is considered that by allowing the tungsten oxide particles having the semiconductor-like properties and dielectric properties to be present near the lithium composite oxide particles in a positive electrode active substance of a battery, the positive electrode active substance is improved in electron conducting properties owing to hopping of electrons in the tungsten oxide particles. In the present invention, since the particle diameter of the tungsten oxide lies within the specific range, the tungsten oxide can exhibit the semiconductor-like behavior or dielectric behavior, thereby causing the aforementioned phenomenon. As a result, it is considered that the positive electrode active substance is improved in electron conducting properties, and it is therefore possible to reduce a D.C. resistance of the resulting battery. In addition, owing to the effect of improving electron conducting properties of the positive electrode active substance, it is also possible to improve a rate characteristic of the battery by adding a small amount of the tungsten oxide particles to the positive electrode active substance.

In the present invention, the tungsten oxide particles may be mixed with the lithium composite oxide particles having a layered rock salt structure such that granular tungsten oxide is present in contact with the surface of the respective lithium composite oxide particles, and it is not required that the whole surface of the respective lithium composite oxide particles having a layered rock salt structure is coated with the tungsten oxide. It is considered that since the tungsten oxide is not present to cover the surface of the respective lithium composite oxide particles in a layered form, but present in bulk as the tungsten oxide particles, the positive electrode active substance may rather undergo accelerated movement of electrons through the surface layer thereof without deterioration in diffusion of ions thereover. Therefore, it is considered that the resulting battery can be improved in D.C. resistance and rate characteristic.

The average secondary particle diameter of the tungsten oxide particles is 0.3 to 3.0 µm, preferably 0.3 to 2.8 µm, and more preferably 0.3 to 2.5 µm. When the average secondary particle diameter of the tungsten oxide particles is more than 3.0 µm, the resulting battery tends to be contrarily deteriorated in D.C. resistance under low-temperature conditions. When the average secondary particle diameter of the tungsten oxide particles is less than 0.3 µm, the tungsten oxide particles tend to be hardly mixed with the lithium composite oxide particles, so that the resulting battery tends to be deteriorated in characteristics thereof, and further the tungsten oxide particles tend to be deteriorated in handling properties, which may be undesirable for production of the battery.

The content of W in the positive electrode active substance particles according to the present invention is 0.1 to 4.0 mol% based on a total molar amount of Ni, Co and Mn in the lithium composite oxide particles. When the content of W in the positive electrode active substance particles is less than 0.1 mol%, the resulting battery tends to fail to exhibit the effect of improving D.C. resistance characteristics under low-temperature conditions. When the content of W in the positive electrode active substance particles is more than 4.0 mol%, the resulting battery tends to be contrarily deteriorated in D.C. resistance under low-temperature conditions. The content of W in the positive electrode active substance particles is preferably 0.3 to 3.8 mol% based on a total molar amount of Ni, Co and Mn in the lithium composite oxide particles.

In addition, in the positive electrode active substance particles according to the present invention, the average secondary particle diameter of the tungsten oxide particles is not less than 0.02 and not more then 0.75 time, and more preferably not less than 0.05 and not more than 0.50 time the average secondary particle diameter of the lithium composite oxide particles.

Also, the BET specific surface area of the positive electrode active substance particles according to the present invention is preferably not less than 0.25 and not more than 1.70 m²/g. When the BET specific surface area of the positive electrode active substance particles is less than 0.25 m²/g, the contact area between the positive electrode active substance particles and an electrolyte solution tends to become excessively small, so that the resulting battery tends to be deteriorated in discharge capacity. When the BET specific surface area of the positive electrode active substance particles is more than 1.70 m²/g, the reaction between the positive electrode active substance particles and the electrolyte solution tends to proceed excessively, so that the resulting battery tends to suffer from deterioration in initial efficiency and generation of gasses. The BET specific surface area of the positive electrode active substance particles is preferably not less than 0.35 and not more than 1.65 m²/g, and more preferably not less than 0.45 and not more than 1.60 m²/g.

Furthermore, the BET specific surface area of the positive electrode active substance particles according to the present invention is not less than 1.05 and not more then 1.75 times, and more preferably not less than 1.10 and not more than 1.70 times the BET specific surface area of the lithium composite oxide particles used.

Next, the process for producing the positive electrode active substance particles for non-aqueous electrolyte secondary batteries according to the present invention is described.

The process for producing the positive electrode active substance particles for non-aqueous electrolyte secondary batteries according to the present invention comprises the step of adding tungsten oxide particles as an additive into lithium composite oxide particles having a layered rock salt structure which are chemically reacted with at least Li and comprise at least one element selected from the group consisting of Ni, Co and Mn, followed by mixing the resulting mixture, in which the tungsten oxide particles are added and mixed such that W is present in an amount of 0.1 to 4.0 mol% based on a total molar amount of Ni, Co and Mn in the lithium composite oxide particles.

If the tungsten oxide is added upon synthesis of the lithium composite oxide particles and then the resulting mixture is calcined, W tends to be chemically reacted with Li and Ni in the lithium composite oxide particles to form an Li-Ni-W oxide, so that the the lithium composite oxide tends to be coated with the Li-Ni-W oxide. In the present invention, the tungsten oxide is present in the form of particles near the lithium composite oxide particles, and therefore the resulting battery can be improved in D.C. resistance under low-temperature conditions and rate characteristic.

The average secondary particle diameter of the lithium composite oxide particles which may be used in the present invention is preferably 2.0 to 20 *µ*m, more preferably 2.5 to 13 *µ*m, and even more preferably 3.0 to 12 *µ*m.

The average secondary particle diameter of the tungsten oxide particles to be added which may be used in the present invention is 0.1 to 3.0 *µ*m, more preferably 0.2 to 2.8 *µ*m, and even more preferably 0.3 to 2.5 *µ*m.

The average secondary particle diameter of the tungsten oxide particles is not less than 0.02 and not more then 0.75 time, and more preferably not less than 0.05 and not more than 0.50 time the average secondary particle diameter of the lithium composite oxide particles. When the average secondary particle diameter of the tungsten oxide particles is more then 0.75 time the average secondary particle diameter of the lithium composite oxide particles, the contact points between the the lithium composite oxide particles and the tungsten oxide particles tends to be reduced, so that no sufficient effect of improving electron-conducting properties tends to be attained. On the other hand, when the average secondary particle diameter of the tungsten oxide particles is less then 0.02 time the average secondary particle diameter of the lithium composite oxide particles, the fine tungsten oxide particles tend to be aggregated together and therefore hardly uniformly mixed, and the contact points between the the lithium composite oxide particles and the tungsten oxide particles tends to be reduced, so that no sufficient effect of improving electron-conducting properties tends to be attained.

In addition, the BET specific surface area of the positive electrode active substance particles according to the present invention is preferably not less than 1.05 and not more then 1.75 times, and more preferably not less than 1.10 and not more than 1.70 times the BET specific surface area of the lithium composite oxide particles before adding the tungsten oxide particles thereto. By adding the tungsten oxide particles having the specific particle diameter to the lithium composite oxide particles, the BET specific surface area of the resulting positive electrode active substance particles can be controlled so as to be not less than 1.05 times the the BET specific surface area of the lithium composite oxide particles. When the BET specific surface area of the positive electrode active substance particles is more than 1.75 times that of of the lithium composite oxide particles, the fine tungsten oxide particles tend to be aggregated together, hardly deaggregated again, in particular, upon preparation of an electrode slurry, and therefore hardly uniformly mixed.

The lithium composite oxide particles and the tungsten oxide particles may be mixed by any known methods. Examples of the mixing methods include a method of mixing the particles in a dry manner, a method of mixing and drying the particles in a wet manner, a method of mixing the particles in a spray-dry manner. Of these methods, in view of good convenience and low cost, preferred is the dry-mixing method. Upon the mixing, the lithium composite oxide particles and the tungsten oxide particles as used in the present invention are uniformly mixed without breaking.

Next, a positive electrode using a positive electrode active substance comprising the positive electrode active substance particles for non-aqueous electrolyte secondary batteries according to the present invention is described.

When producing the positive electrode comprising the positive electrode active substance particles according to the present invention, a conducting agent and a binder are added to and mixed with the positive electrode active substance particles by an ordinary method. Examples of the preferred conducting agent include acetylene black, carbon black and graphite. Examples of the preferred binder include polytetrafluoroethylene and polyvinylidene fluoride.

The secondary battery produced by using the positive electrode comprising the positive electrode active substance particles according to the present invention comprises the above positive electrode, a negative electrode and an electrolyte.

Examples of a negative electrode active substance which may be used in the negative electrode include metallic lithium, lithium/aluminum alloys, lithium/tin alloys, and graphite or black lead.

Also, as a solvent for the electrolyte solution, there may be used combination of ethylene carbonate and diethyl carbonate, as well as an organic solvent comprising at least one compound selected from the group consisting of carbonates such as propylene carbonate and dimethyl carbonate, and ethers such as dimethoxyethane.

Further, as the electrolyte, there may be used a solution prepared by dissolving, in addition to lithium phosphate hexafluoride, at least one lithium salt selected from the group consisting of lithium perchlorate and lithium borate tetrafluoride, etc., in the above solvent.

The non-aqueous electrolyte secondary battery produced by using the positive electrode comprising the positive electrode active substance particles according to the present invention has an improvement ratio of D.C. resistance (DCR) of not less than 5% as measured at an ambient temperature of -10°C by controlling a state of charge (SOC) of the secondary battery to 20%. In general, the deterioration in DCR of the secondary battery tends to be observed at SOC of 20%. In the present invention, although the reason is not clearly determined, it is considered that the resulting secondary battery can be improved in DCR at SOC of 20% as well as rate characteristic by adding and mixing the tungsten oxide in the aforementioned range.

### EXAMPLES

Typical embodiments of the present invention are as follows.

The composition of the positive electrode active substance particles was determined in the following manner. That is, 0.2 g of a sample was dissolved under heating in 25 mL of a 20% hydrochloric acid solution. The resulting solution was cooled and then charged into a 100 mL measuring flask together with pure water to prepare a sample solution. The resulting sample solution was subjected to the measurement using ICAP "SPS-4000" manufactured by Seiko Denshi Kogyo Co., Ltd., to quantitatively determine amounts of the respective elements therein.

The identification of a phase of the lithium composite oxide or tungsten oxide was conducted by step scanning method at a rate of 0.8°/min at the intervals of 0.02° in the range of 2θ of 10 to 90° using an X-ray diffraction apparatus "SmartLab" manufactured by Rigaku Co., Ltd.

The average particle diameters of the tungsten oxide particles and the positive electrode active substance particles were measured as follows. That is, 40 mg of sample particles and 60 mL of pure water were charged into a screw vial. Then, 20 *µ*L of a 20 wt% sodium hexametaphosphate solution was added to the screw vial, and the contents of the screw vial were lightly shaken and dispersed by ultrasonic wave for 1 min to prepare a suspension. Using the suspension, the volume-based average particle diameter of the particles was measured by a wet laser method using a laser type particle size distribution measuring apparatus "MICROTRACK HRA" manufactured by Nikkiso Co., Ltd.

The BET specific surface area of the particles was measured as follows. That is, a sample was dried and deaerated under a nitrogen gas atmosphere at 120°C for 45 min, and the BET specific surface area of the thus treated sample was measured using "MONOSORB" manufactured by Yuasa Ionics Inc.

The positive electrode active substance particles according to the present invention were subjected to evaluation of battery characteristics using a 2032 type coin cell.

The coin cell used for the evaluation of battery characteristics was prepared as follows. That is, 90% by weight of the positive electrode active substance particles, 3% by weight of acetylene black and 3% by weight of a graphite both serving as a conducting material, and 4% by weight of polyvinylidene fluoride dissolved in N-methyl pyrrolidone as a binder, were mixed with each other, and then the resulting mixture was applied onto an Al metal foil and then dried at 120°C. The thus obtained sheets were each blanked into 14 mmφ and then compression-bonded together under a pressure of 1.5 t/cm², and the resulting sheet was used as a positive electrode. A metallic lithium having a thickness of 500 *µ*m was blanked into 16 mmφ and used as a negative electrode, and 1 mol/L LiPF₆ solution of a mixed solvent comprising EC and DMC at a volume ratio of 1:2, was used as an electrolyte solution, thereby producing a coin cell of a 2032 type.

The D.C. resistance (DCR) at -10°C was measured under the following conditions. That is, under the environmental condition of 25°C, the coin cell was charged at 0.1C until reaching 4.3 V under CC-CV conditions, and then discharged until reaching 3.0 V. After allowing the coin cell to undergo 3 cycles of the aforementioned charge/discharge operation, while controlling a state of charge (SOC) of the coin cell to 20% under the environmental condition of -10°C, the coin cell was subjected to pulse discharge at 1C for 10 sec, successively subjected to pulse discharge at 2C for 10 sec, and further subjected to pulse discharge at 3C for 10 sec. The resistance value, i.e., the D.C. resistance (DCR) was calculated from each voltage drop upon the pulse discharge and the C rate (current value) according to Ohm's law.

The improvement ratio of the D.C. resistance (DCR) at -10°C (improvement ratio of low-temperature DCR) of the battery was expressed by the improvement ratio of a D.C. resistance (q) of the battery using the positive electrode active substance particles comprising the lithium composite oxide to which the additives were added, to a D.C. resistance (p) of the battery using the positive electrode active substance particles comprising the lithium composite oxide to which no additives were added. Specifically, the improvement ratio (%) of low-temperature DCR was defined by the value calculated from the formula: ((p - q)/p) x 100.

In addition, the rate characteristic was measured under the following conditions. That is, under the environmental condition of 25°C, the coin cell was charged at 0.1C until reaching 4.3 V under CC-CV conditions, and then discharged until reaching 3.0 V. The discharge capacity at this time was represented by (a). Next, the coin cell was charged at 0.1C until reaching 4.3 V under CC-CV conditions, and then discharged at 5C until reaching 3.0 V. The discharge capacity at this time was represented by (b). In the above operation, the rate characteristic (%) was calculated according to the formula: (b)/(a) x 100.

### Comparative Example 1:

### <Li₁.₀₈(Ni_{0.33}CO_{0.33}Mn_{0.33})O₂ particles>

Nickel sulfate, cobalt sulfate and manganese sulfate were weighed such that the ratio therebetween was 1:1:1 in terms of metallic elements Ni, Co and Mn, subjected to wet reaction for causing co-precipitation thereof, and then washed with water and dried, thereby obtaining (Ni_{0.33}CO_{0.33}Mn_{0.33})(OH)₂ particles (precursor).

The thus obtained precursor and lithium carbonate were weighed such that the ratio of Li to the precursor was 1.08:1.00, and both were mixed in a mortar for 1 hr, thereby obtaining a uniform mixture. Fifty grams of the thus obtained mixture was charged into an alumina crucible, and held in atmospheric air at 950°C for 6 hr, thereby obtaining lithium composite oxide particles represented by the formula: Li_{1.08}(Ni_{0.33}CO_{0.33}Mn_{0.33})O₂. The average secondary particle diameter of the thus obtained lithium composite oxide particles was 4.21 *µ*m.

The battery using the obtained lithium composite oxide particles as a positive electrode active substance therefor had a D.C. resistance of 82.8 Q as measured at -10°C and a rate characteristic of 84.3%.

### Example 1:

WO₃ particles having an average secondary particle diameter of 0.4 *µ*m were added to the lithium composite oxide particles obtained in Comparative Example 1 such that W in WO₃ was present in an amount of 0.5 mol% based on a total molar amount of Ni, Co and Mn in the lithium composite oxide, and the obtained mixture was uniformly mixed in a mortar to thereby obtain positive electrode active substance particles. The coin cell produced using the thus obtained positive electrode active substance particles had a D.C. resistance of 70.8 Ω as measured at -10°C and a rate characteristic of 85.4%, and the improvement ratio of low-temperature DCR of the above coin cell to that of the coin cell obtained in Comparative Example 1 was 14.5%. The mixing conditions of the thus obtained positive electrode active substance particles are shown in Table 1, and various properties of the positive electrode active substance particles are shown in Table 2.

### Example 2:

WO₃ particles having an average secondary particle diameter of 0.4 *µ*m were added to the lithium composite oxide particles obtained in Comparative Example 1 such that W in WO₃ was present in an amount of 1.0 mol% based on a total molar amount of Ni, Co and Mn in the lithium composite oxide. The mixing conditions of the thus obtained positive electrode active substance particles are shown in Table 1, and various properties of the positive electrode active substance particles are shown in Table 2.

### Example 3:

WO₃ particles having an average secondary particle diameter of 0.4 *µ*m were added to the lithium composite oxide particles obtained in Comparative Example 1 such that W in WO₃ was present in an amount of 3.5 mol% based on a total molar amount of Ni, Co and Mn in the lithium composite oxide. The mixing conditions of the thus obtained positive electrode active substance particles are shown in Table 1, and various properties of the positive electrode active substance particles are shown in Table 2.

### Example 4:

WO₃ particles having an average secondary particle diameter of 2.2 *µ*m were added to the lithium composite oxide particles obtained in Comparative Example 1 such that W in WO₃ was present in an amount of 1 mol% based on a total molar amount of Ni, Co and Mn in the lithium composite oxide. The mixing conditions of the thus obtained positive electrode active substance particles are shown in Table 1, and various properties of the positive electrode active substance particles are shown in Table 2.

### Comparative Example 2:

ZrO₂ particles having an average secondary particle diameter of 0.6 *µ*m were added to the lithium composite oxide particles obtained in Comparative Example 1 such that Zr in ZrO₂ was present in an amount of 1.0 mol% based on a total molar amount of Ni, Co and Mn in the lithium composite oxide. The mixing conditions of the thus obtained positive electrode active substance particles are shown in Table 1, and various properties of the positive electrode active substance particles are shown in Table 2.

### Comparative Example 3:

WO₃ particles having an average secondary particle diameter of 0.4 *µ*m were added to the lithium composite oxide particles obtained in Comparative Example 1 such that W in WO₃ was present in an amount of 6.0 mol% based on a total molar amount of Ni, Co and Mn in the lithium composite oxide. The mixing conditions of the thus obtained positive electrode active substance particles are shown in Table 1, and various properties of the positive electrode active substance particles are shown in Table 2.

### Comparative Example 4:

WO₃ particles having an average secondary particle diameter of 4.1 *µ*m were added to the lithium composite oxide particles obtained in Comparative Example 1 such that W in WO₃ was present in an amount of 1.0 mol% based on a total molar amount of Ni, Co and Mn in the lithium composite oxide. The mixing conditions of the thus obtained positive electrode active substance particles are shown in Table 1, and various properties of the positive electrode active substance particles are shown in Table 2.

### Comparative Example 5:

WO₃ particles having an average secondary particle diameter of 10.4 *µ*m were added to the lithium composite oxide particles obtained in Comparative Example 1 such that W in WO₃ was present in an amount of 1.0 mol% based on a total molar amount of Ni, Co and Mn in the lithium composite oxide. The mixing conditions of the thus obtained positive electrode active substance particles are shown in Table 1, and various properties of the positive electrode active substance particles are shown in Table 2.

### Comparative Example 6:

### <Li_{1.03}(Ni_{0.5}CO_{0.2}Mn_{0.3})O₂ particles>

Nickel sulfate, cobalt sulfate and manganese sulfate were weighed such that the ratio therebetween was 5:2:3 in terms of metallic elements Ni, Co and Mn, subjected to wet reaction for causing co-precipitation thereof, and then washed with water and dried, thereby obtaining (Ni_{0.5}CO_{0.2}Mn_{0.3})(OH)₂ particles (precursor).

The thus obtained precursor and lithium carbonate were weighed such that the ratio of Li to the precursor was 1.03:1.00, and both were mixed in a mortar for 1 hr, thereby obtaining a uniform mixture. Fifty grams of the thus obtained mixture was charged into an alumina crucible, and held in atmospheric air at 930°C for 6 hr, thereby obtaining lithium composite oxide particles represented by the formula: Li_{1.03}(Ni_{0.5}CO_{0.2}Mn_{0.3})O₂. The average secondary particle diameter of the thus obtained lithium composite oxide particles was 5.78 *µ*m.

The battery using the obtained lithium composite oxide particles as a positive electrode active substance therefor had a D.C. resistance of 171.5 Ω as measured at -10°C and a rate characteristic of 79.6%.

### Example 5:

WO₃ particles having an average secondary particle diameter of 0.4 *µ*m were added to the lithium composite oxide particles obtained in Comparative Example 6 such that W in WO₃ was present in an amount of 1.0 mol% based on a total molar amount of Ni, Co and Mn in the lithium composite oxide, and the obtained mixture was uniformly mixed in a mortar to thereby obtain positive electrode active substance particles. The coin cell produced using the thus obtained positive electrode active substance particles had a D.C. resistance of 133.5 Ω as measured at -10°C and a rate characteristic of 81.2%, and the improvement ratio of low-temperature DCR of the above coin cell to that of the coin cell obtained in Comparative Example 6 was 45.9%. The mixing conditions of the thus obtained positive electrode active substance particles are shown in Table 1, and various properties of the positive electrode active substance particles are shown in Table 2.

**Table 1**

| Examples and Comparative Examples | Lithium composite oxide particles | | | |
|---|---|---|---|---|
| | Chemical formula | | | Average secondary particle diameter (*µ*m) |
| Example 1 | Li_{1.08}(Ni_{0.33}Co_{0.33}Mn_{0.33})O₂ | | | 4.21 |
| Example 2 | Li_{1.08}(Ni_{0.33}Co_{0.33}Mn_{0.33})O₂ | | | 4.21 |
| Example 3 | Li_{1.08}(Ni_{0.33}Co_{0.33}Mn_{0.33})O₂ | | | 4.21 |
| Example 4 | Li_{1.08}(Ni_{0.33}Co_{0.33}Mn_{0.33})O₂ | | | 4.21 |
| Example 5 | Li_{1.03}(Ni_{0.8}Co_{0.2}Mn_{0.3})O₂ | | | 5.78 |
| Comparative Example 1 | Li_{1.08}(Ni_{0.33}Co_{0.33}Mn_{0.33})O₂ | | | 4.21 |
| Comparative Example 2 | Li_{1.08}(Ni_{0.33}Co_{0.33}Mn_{0.33})O₂ | | | 4.21 |
| Comparative Example 3 | Li_{1.08}(Ni_{0.33}Co_{0.33}Mn_{0.33})O₂ | | | 4.21 |
| Comparative Example 4 | Li_{1.08}(Ni_{0.33}Co_{0.33}Mn_{0.33})O₂ | | | 4.21 |
| Comparative Example 5 | Li_{1.08}(Ni_{0.33}Co_{0.33}Mn_{0.33})O₂ | | | 4.21 |
| Comparative Example 6 | Li_{1.03}(Ni_{0.33}Co_{0.2}Mn_{0.3})O₂ | | | 5.78 |

| Examples and Comparative Examples | Additives | | | Particle diameter of additives/ particle diameter of lithium composite oxide |
|---|---|---|---|---|
| | Chemical formula | Average secondary particle diameter (*µ*m) | Amount added (W/Me ratio) (mol%) | |
| Example 1 | WO₃ | 0.4 | 0.5 | 0.10 |
| Example 2 | WO₃ | 0.4 | 1.0 | 0.10 |
| Example 3 | WO₃ | 0.4 | 3.5 | 0.10 |
| Example 4 | WO₃ | 2.2 | 1.0 | 0.52 |
| Example 5 | WO₃ | 0.4 | 1.0 | 0.07 |
| Comparative Example 1 | - | - | 0 | - |
| Comparative Example 2 | ZrO₂ | 0.6 | 1.0 | 0.14 |
| Comparative Example 3 | WO₃ | 0.4 | 6.0 | 0.10 |
| Comparative Example 4 | WO₃ | 4.1 | 1.0 | 0.97 |
| Comparative Example 5 | WO₃ | 10.4 | 1.0 | 2.47 |
| Comparative Example 6 | - | - | 0 | - |

**Table 2**

| Examples and Comparative Examples | Properties of particles | | |
|---|---|---|---|
| | Average secondary particle diameter (*µ*m) | BET specific surface area (m²/g) | Rate of increase in BET |
| Example 1 | 4.22 | 0.99 | 1.08 |
| Example 2 | 4.22 | 1.03 | 1.12 |
| Example 3 | 4.16 | 1.48 | 1.61 |
| Example 4 | 4.16 | 1.12 | 1.22 |
| Example 5 | 5.78 | 0.65 | 1.16 |
| Comparative Example 1 | 4.21 | 0.92 | - |
| Comparative Example 2 | 4.23 | 1.18 | 1.28 |
| Comparative Example 3 | 4.00 | 1.66 | 1.80 |
| Comparative Example 4 | 4.23 | 0.99 | 1.08 |
| Comparative Example 5 | 4.50 | 0.94 | 1.02 |
| Comparative Example 6 | 5.78 | 0.56 | - |

| Examples and Comparative Examples | Properties of battery | | |
|---|---|---|---|
| | D.C. resistance (DCR) at -10°C; SOC: 20% | | Rate characteristic (%) |
| | Resistance value (Ω) | Improvement ratio of low-temperature DCR (%) | |
| Example 1 | 70.8 | 14.5 | 85.4 |
| Example 2 | 69.0 | 16.7 | 85.5 |
| Example 3 | 70.7 | 14.6 | 85.2 |
| Example 4 | 77.0 | 7.0 | 85.9 |
| Example 5 | 133.5 | 45.9 | 81.2 |
| Comparative Example 1 | 82.8 | - | 84.3 |
| Comparative Example 2 | 84.0 | -1.4 | 83.8 |
| Comparative Example 3 | 84.7 | -2.3 | 83.8 |
| Comparative Example 4 | 88.2 | -6.5 | 84.9 |
| Comparative Example 5 | 86.8 | -4.8 | 83.8 |
| Comparative Example 6 | 171.5 | - | 79.6 |

FIG. 1 shows a scanning electron micrograph of the positive electrode active substance particles obtained in Example 3. As apparently recognized from FIG. 1, it was confirmed that in the positive electrode active substance particles obtained in Example 3, granular WO₃ was partially present on a surface of the lithium composite oxide particles, and the lithium composite oxide particles and WO₃ were respectively present in the form of independent particles.

Owing to the above configuration of presence of WO₃, it is considered that the resulting battery is free from deterioration in diffusion of Li therein, but can also be enhanced in electron-conducting properties, in particular, under low-temperature conditions, by the presence of contact points between WO₃ and the lithium composite oxide particles.

### INDUSTRIAL APPLICABILITY

The positive electrode active substance particles for non-aqueous electrolyte secondary batteries according to the present invention are capable of improving electron-conducting properties of a battery under low-temperature conditions when used in the battery, and therefore can be suitably used as a positive electrode active substance capable of improving a D.C. resistance of the battery.

## Claims

1. Positive electrode active substance particles for non-aqueous electrolyte secondary batteries, consisting of:
lithium composite oxide particles having a layered rock salt structure which are chemically reacted with at least Li and comprise at least one element selected from the group consisting of Ni, Co and Mn, and
tungsten which is present in the form of granular tungsten oxide particles which are present in contact with the surface of the respective lithium composite oxide particles,
in which tungsten oxide particles W is present in an amount of 0.1 to 4.0 mol% based on a total molar amount of Ni, Co and Mn in the lithium composite oxide particles, and the tungsten oxide particles have an average secondary particle diameter of 0.3 to 3.0 µm,
the average particle diameter being determined by the method described herein.

2. The positive electrode active substance particles for non-aqueous electrolyte secondary batteries according to claim 1, wherein the tungsten oxide particles have an average secondary particle diameter of 0.3 to 2.5 µm,
the average particle diameter being determined by the method described herein.

3. The positive electrode active substance particles for non-aqueous electrolyte secondary batteries according to either claim 1 or claim 2, wherein the lithium composite oxide particles have a composition represented by the formula: Liₐ(NiₓCo_{y}Mn_{z})O₂ wherein a is not less than 0.9 and not more than 1.2 and a sum of x, y and z is 1.

4. The positive electrode active substance particles for non-aqueous electrolyte secondary batteries according to any one of claims 1 to 3, wherein the lithium composite oxide comprises all of Ni, Co and Mn.

5. The positive electrode active substance particles for non-aqueous electrolyte secondary batteries according to any one of claims 1 to 4, wherein the average secondary particle diameter of the lithium composite oxide particles is 2.0 to 20 µm,
the average particle diameter being determined by the method described herein.

6. The positive electrode active substance particles for non-aqueous electrolyte secondary batteries according to any one of claims 1 to 5, wherein the tungsten oxide particles are selected from WO₂ and WO₃.

7. The positive electrode active substance particles for non-aqueous electrolyte secondary batteries according to any one of claims 1 to 6, wherein the tungsten oxide particles are WO₃.

8. The positive electrode active substance particles for non-aqueous electrolyte secondary batteries according to any one of claims 1 to 7, wherein the average secondary particle diameter of the tungsten oxide particles is not less than 0.02 and not more than 0.75 times the average secondary particle diameter of the lithium composite oxide particles.

9. The positive electrode active substance particles for non-aqueous electrolyte secondary batteries according to any one of claims 1 to 8, wherein the BET specific surface area of the positive electrode active substance particles is not less than 0.25 and not more than 1.70 m²/g.

10. A process for producing the positive electrode active substance particles for non-aqueous electrolyte secondary batteries according to any one of claims 1 to 9, comprising the step of mixing lithium composite oxide particles having a layered rock salt structure which are chemically reacted with at least Li and comprise at least one element selected from the group consisting of Ni, Co and Mn, and tungsten oxide particles, in which the tungsten oxide particles have an average secondary particle diameter of 0.3 to 3.0 µm; an average secondary particle diameter of the tungsten oxide particles is not less than 0.02 time and not more than 0.75 time an average secondary particle diameter of the lithium composite oxide particles; and tungsten oxide is added such that W is present in an amount of 0.1 to 4.0 mol% based on a total molar amount of Ni, Co and Mn in the lithium composite oxide particles,
the average particle diameter being determined by the method described herein.

11. A process according to claim 10 wherein the step of mixing the lithium composite oxide particles and tungsten oxide particles involves mixing the particles in a dry manner, mixing and drying the particles in a wet manner or mixing the particles in a spray-dry manner.

12. A positive electrode comprising the positive electrode active substance particles according to any one of claims 1 to 9, a conducting agent and a binder.

13. A non-aqueous electrolyte secondary battery using the positive electrode active substance particles for non-aqueous electrolyte secondary batteries according to any one of claims 1 to 9.

14. Use of the positive electrode active substance particles according to any one of claims 1 to 9 in a non-aqueous electrolyte secondary battery.

## Patentansprüche

1. Aktivstoffteilchen einer positiven Elektrode für Sekundärbatterien mit nichtwässrigem Elektrolyten, bestehend aus:
Lithium-Verbundoxidteilchen, die eine geschichtete Steinsalzstruktur aufweisen und chemisch mit zumindest Li reagiert sind und zumindest ein Element umfassen, ausgewählt aus der Gruppe bestehend aus Ni, Co und Mn, und
Wolfram, das in Form von granularen Wolframoxidteilchen vorhanden ist, die in Kontakt mit der Oberfläche der entsprechenden Lithium-Verbundoxidteilchen vorliegen,
in denen Wolframoxidteilchen W in einer Menge von 0,1 bis 4,0 Molprozent vorhanden sind, basierend auf einer gesamten molaren Menge von Ni, Co und Mn in den Lithium-Verbundoxidteilchen, und die Wolframoxidteilchen einen durchschnittlichen Sekundärteilchendurchmesser von 0,3 bis 3,0 µm aufweisen,
wobei der durchschnittliche Teilchendurchmesser durch das hierin beschriebene Verfahren bestimmt wird.

2. Aktivstoffteilchen einer positiven Elektrode für Sekundärbatterien mit nichtwässrigem Elektrolyten nach Anspruch 1, wobei die Wolframoxidteilchen einen durchschnittlichen Sekundärteilchendurchmesser von 0,3 bis 2,5 µm aufweisen,
wobei der durchschnittliche Teilchendurchmesser durch das hierin beschriebene Verfahren bestimmt wird.

3. Aktivstoffteilchen einer positiven Elektrode für Sekundärbatterien mit nichtwässrigem Elektrolyten nach entweder Anspruch 1 oder Anspruch 2, wobei die Lithium-Verbundoxidteilchen eine Zusammensetzung aufweisen, die durch die folgende Formel dargestellt ist: Liₐ(NiₓCo_{y}Mn_{z})O₂, wobei a nicht weniger als 0,9 und nicht mehr als 1,2 ist und eine Summe aus x, y und z 1 ist.

4. Aktivstoffteilchen einer positiven Elektrode für Sekundärbatterien mit nichtwässrigem Elektrolyten nach einem der Ansprüche 1 bis 3, wobei das Lithium-Verbundoxid alle von Ni, Co und Mn umfasst.

5. Aktivstoffteilchen einer positiven Elektrode für Sekundärbatterien mit nichtwässrigem Elektrolyten nach einem der Ansprüche 1 bis 4, wobei der durchschnittliche Sekundärteilchendurchmesser der Lithium-Verbundoxidteilchen 2,0 bis 20 µm ist,
wobei der durchschnittliche Teilchendurchmesser durch das hierin beschriebene Verfahren bestimmt wird.

6. Aktivstoffteilchen einer positiven Elektrode für Sekundärbatterien mit nichtwässrigem Elektrolyten nach einem der Ansprüche 1 bis 5, wobei die Wolframoxidteilchen ausgewählt sind aus WO₂ und WO₃.

7. Aktivstoffteilchen einer positiven Elektrode für Sekundärbatterien mit nichtwässrigem Elektrolyten nach einem der Ansprüche 1 bis 6, wobei die Wolframoxidteilchen WO₃ sind.

8. Aktivstoffteilchen einer positiven Elektrode für Sekundärbatterien mit nichtwässrigem Elektrolyten nach einem der Ansprüche 1 bis 7, wobei der durchschnittliche Sekundärteilchendurchmesser der Wolframoxidteilchen nicht weniger als das 0,02- und nicht mehr als das 0,75-fache des durchschnittlichen Sekundärteilchendurchmessers der Lithium-Verbundoxidteilchen ist.

9. Aktivstoffteilchen einer positiven Elektrode für Sekundärbatterien mit nichtwässrigem Elektrolyten nach einem der Ansprüche 1 bis 8, wobei die BET-spezifische Oberfläche der Aktivstoffteilchen einer positiven Elektrode nicht weniger als 0,25 und nicht mehr als 1,70 m²/g ist.

10. Prozess zum Herstellen der Aktivstoffteilchen einer positiven Elektrode für Sekundärbatterien mit nichtwässrigem Elektrolyten nach einem der Ansprüche 1 bis 9, umfassend den Schritt eines Mischens der Lithium-Verbundoxidteilchen, die eine geschichtete Steinsalzstruktur aufweisen und chemisch mit zumindest Li reagiert sind, und zumindest ein Element umfassen, das ausgewählt ist aus der Gruppe bestehend aus Ni, Co und Mn, und Wolframoxidteilchen, in denen Wolframoxidteilchen einen durchschnittlichen Sekundärteilchendurchmesser von 0,3 bis 3,0 µm aufweisen; wobei ein durchschnittlicher Sekundärteilchendurchmesser der Wolframoxidteilchen nicht weniger als das 0,02-fache- und nicht mehr als das 0,75-fache des durchschnittlichen Sekundärteilchendurchmessers der Lithium-Verbundoxidteilchen ist; und Wolfram-Oxid hinzugefügt wird, sodass W in einer Menge von 0,1 bis 4,0 Molprozent vorhanden ist, basierend auf einer gesamten molaren Menge von Ni, Co und Mn in den Lithium-Verbundoxidteilchen,
wobei der durchschnittliche Teilchendurchmesser durch das hierin beschriebene Verfahren bestimmt wird.

11. Prozess nach Anspruch 10, wobei der Schritt eines Mischens der Lithium-Verbundoxidteilchen und Wolframoxidteilchen ein Mischen der Teilchen auf eine trockene Weise, ein Mischen und Trocknen der Teilchen auf eine nasse Weise oder ein Mischen der Teilchen auf eine Sprühtrocknungsweise involviert.

12. Positive Elektrode, umfassend die Aktivstoffteilchen einer positiven Elektrode nach einem der Ansprüche 1 bis 9, ein leitfähiges Mittel und ein Bindemittel.

13. Sekundärbatterie mit nichtwässrigem Elektrolyten, die die Aktivstoffteilchen einer positiven Elektrode für Sekundärbatterien mit nichtwässrigem Elektrolyten nach einem der Ansprüche 1 bis 9 verwendet.

14. Verwendung der Aktivstoffteilchen einer positiven Elektrode nach einem der Ansprüche 1 bis 9 in einer Sekundärbatterie mit nichtwässrigem Elektrolyten.

## Revendications

1. Particules de substance active d'électrode positive pour batteries secondaires à électrolyte non aqueux, constituées de :
particules d'oxyde composite de lithium, ayant une structure de sel gemme stratifiée, qui sont chimiquement mises en réaction avec au moins Li et comprennent au moins un élément sélectionné parmi le groupe constitué de Ni, de Co et de Mn, et
tungstène qui est présent sous forme de particules d'oxyde de tungstène granulaire qui sont présentes en contact avec la surface des particules d'oxyde composite de lithium respectives,
dans lesquelles des particules d'oxyde de tungstène W sont présentes en une quantité de 0,1 à 4,0 % en poids sur la base d'une quantité molaire totale de Ni, de Co et de Mn dans les particules d'oxyde composite de lithium, et les particules d'oxyde de tungstène ont un diamètre moyen de particules secondaires de 0,3 à 3,0 µm,
le diamètre moyen des particules étant déterminé par le procédé décrit ici.

2. Particules de substance active d'électrode positive pour batteries secondaires à électrolyte non aqueux selon la revendication 1, dans lesquelles les particules d'oxyde de tungstène ont un diamètre moyen de particules secondaires de 0,3 à 2,5 µm,
le diamètre moyen des particules étant déterminé par le procédé décrit ici.

3. Particules de substance active d'électrode positive pour batteries secondaires à électrolyte non aqueux selon la revendication 1 ou la revendication 2, dans lesquelles les particules d'oxyde composite de lithium ont une composition représentée par la formule : Liₐ(NiₓCo_{y}Mn_{z})O₂, dans laquelle a n'est pas inférieur à 0,9 et n'est pas supérieur à 1,2 et une somme de x, d'y et de z est 1.

4. Particules de substance active d'électrode positive pour batteries secondaires à électrolyte non aqueux selon l'une quelconque des revendications 1 à 3, dans lesquelles l'oxyde composite de lithium comprend la totalité de Ni, de Co et de Mn.

5. Particules de substance active d'électrode positive pour batteries secondaires à électrolyte non aqueux selon l'une quelconque des revendications 1 à 4, dans lesquelles le diamètre moyen de particules secondaires des particules d'oxyde composite de lithium est de 2,0 à 20 µm,
le diamètre moyen des particules étant déterminé par le procédé décrit ici.

6. Particules de substance active d'électrode positive pour batteries secondaires à électrolyte non aqueux selon l'une quelconque des revendications 1 à 5, dans lesquelles les particules d'oxyde de tungstène sont sélectionnées à partir de WO₂ et de WO₃.

7. Particules de substance active d'électrode positive pour batteries secondaires à électrolyte non aqueux selon l'une quelconque des revendications 1 à 6, dans lesquelles les particules d'oxyde de tungstène sont WO₃.

8. Particules de substance active d'électrode positive pour batteries secondaires à électrolyte non aqueux selon l'une quelconque des revendications 1 à 7, dans lesquelles le diamètre moyen de particules secondaires des particules d'oxyde de tungstène n'est pas plus de 0,02 et n'est pas plus de 0,75 fois le diamètre moyen de particules secondaires des particules d'oxyde composite de lithium.

9. Particules de substance active d'électrode positive pour batteries secondaires à électrolyte non aqueux selon l'une quelconque des revendications 1 à 8, dans lesquelles la surface spécifique BET des particules de substance active d'électrode positive n'est pas inférieure à 0,25 et n'est pas supérieure à 1,70 m²/g.

10. Procédé pour produire les particules de substance active d'électrode positive pour batteries secondaires à électrolyte non aqueux selon l'une quelconque des revendications 1 à 9, comprenant l'étape du mélangeage de particules d'oxyde composite de lithium ayant une structure de sel gemme stratifiée qui sont chimiquement mises en réaction avec au moins Li et comprennent au moins un élément sélectionné parmi le groupe constitué de Ni, de Co et de Mn, et de particules d'oxyde de tungstène, dans lequel les particules d'oxyde de tungstène ont un diamètre moyen de particules secondaires de 0,3 à 3,0 µm ; un diamètre moyen de particules secondaires des particules d'oxyde de tungstène n'est pas moins de 0,02 fois et n'est pas plus de 0,75 fois un diamètre moyen de particules secondaires des particules d'oxyde composite de lithium ; et de l'oxyde de tungstène est ajouté de telle sorte que W soit présent en une quantité de 0,1 à 4,0% en poids sur la base d'une quantité molaire totale de Ni, de Co et de Mn dans les particules d'oxyde composite de lithium,
le diamètre moyen des particules étant déterminé par le procédé décrit ici.

11. Procédé selon la revendication 10, dans lequel l'étape du mélangeage des particules d'oxyde composite de lithium et des particules d'oxyde de tungstène implique le mélangeage des particules de manière sèche, le mélangeage et le séchage des particules de manière humide ou le mélangeage des particules de manière sèche par atomisation.

12. Électrode positive comprenant les particules de substance active d'électrode positive selon l'une quelconque des revendications 1 à 9, un agent conducteur et un liant.

13. Batterie secondaire à électrolyte non aqueux utilisant les particules de substance active d'électrode positive pour batteries secondaires à électrolyte non aqueux selon l'une quelconque des revendications 1 à 9.

14. Utilisation des particules de substance active d'électrode positive selon l'une quelconque des revendications 1 à 9 dans une batterie secondaire à électrolyte non aqueux.
